Europäisches Patentamt

European Patent Office

Office européen des brevets

(19)

(11) **EP 1 489 052 A2**

(12) **EUROPEAN PATENT APPLICATION**

(43) Date of publication:
**22.12.2004 Bulletin 2004/52**

(51) Int Cl.⁷: **C03B 37/029**

(21) Application number: **04397010.2**

(22) Date of filing: **01.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **13.06.2003 FI 20035095**

(71) Applicant: **Photonium OY**
**08500 Lohja as (FI)**

(72) Inventors:
• **RAJALA, Markku**
**00910, HELSINKI (FI)**

• **TUURNALA, Taneli**
**01280, ESPOO (FI)**
• **WIDERHOLM, Risto**
**00780, HELSINKI (FI)**
• **NIEMI, Rami**
**00530, HELSINKI (FI)**

(74) Representative: **Pursiainen, Timo Pekka**
**Tampereen Patenttitoimisto Oy,**
**Hermiankatu 12B**
**33720 Tampere (FI)**

(54) **Furnace having thermal insulation for drawing optical fibres from a preform**

(57)    A heating apparatus for preparing an optical fiber (2) from a preferably vertical fiber preform (1) in a draw furnace, in which draw furnace the fiber preform is heated with the heating apparatus in the heating zone of the draw furnace in such a way that a molten, downwards tapering zone is formed in the preform, from which a thin fiber (2) is produced by means of gravity and/or drawing the fiber downwards, which heating apparatus comprises at least a preferably tubular heating element (5), placed around the fiber preform in the draw furnace, for heating the fiber preform, and a heating means (9) placed around the heating element in the draw furnace, for heating the heating element, as well as an insulator element (6) around the heating element. The heating element (5) and the insulator element (6) are surrounded at least partly by a radiation shielding (8) to reflect thermal radiation from the heating element to the insulator element back to the heating element.

Fig. 1

**Description**

The invention relates to a heating apparatus for preparing an optical fiber from a preferably vertical fiber preform in a draw furnace, in which draw furnace the fiber preform is heated with the heating apparatus in the heating zone of the draw furnace in such a way that a molten, downwards tapering zone is formed in the preform, from which a thin fiber is formed by means of gravity and/or drawing the fiber downwards, which heating apparatus comprises at least a preferably tubular heating element, placed in the draw furnace and surrounding the fiber preform, for heating the fiber preform, and a heating means around the heating element placed in the draw furnace, for heating the heating element, as well as an insulator element around the heating element.

Optical fibers are generally used for data transmission. Such a fiber is typically made of quartz glass, and it comprises at least two parts, a cladding and a core. The core has a higher index of refraction than the shell, wherein light propagating in the fiber cannot escape from the fiber but is totally reflected at the interface of the core and the cladding.

In most commonly used methods for manufacturing optical fibers, the first step is to make a preform which is typically a glass bar with a thickness of 15 to 150 mm and a length of 100 to 1500 mm. This glass bar is typically drawn in a fiber draw tower to an optical fiber with the thickness of 100 to 200 µm. In the fiber draw tower, the preform is fed into a fiber draw furnace, one end of the preform being softened in the hot zone of the fiber draw furnace. Finally, the viscosity of the preform glass decreases to such a low level at the end of the preform that some glass (a starting drop, or a drop) comes off the end of the preform. By the effect of gravity, the drop falls down and draws a thin glass fiber along with it. This glass fiber is fed into a drawing capstan, and by controlling the drawing speed of the capstan and the speed of feeding the preform, the thickness of the fiber can be adjusted as desired.

In the manufacture of optical fibers, the aim is to have a larger preform size, wherein the production process can be made as efficient and economical as possible. Typically, this means that the preform has a diameter of more than 100 mm and a length of more than 1000 mm, wherein more than 1000 km of an optical fiber with a thickness of 125 µm can be drawn from a single preform.

In a conventional fiber draw furnace, the heated preform is normally surrounded by a heating element made of graphite or zirconium oxide. This heating element is normally heated electrically either by conducting an electric current through it (resistive heating) or by placing the element in such a magnetic field that the element is heated by the eddy currents induced by the magnetic field in the element (inductive heating). With large preform sizes, the inductive heating is the more efficient method. The energy needed for reducing the viscosity of the preform glass is transferred from the heating element to the glass almost totally as thermal radiation. The thermal radiation is absorbed onto the surface of the glass, heating the same, after which the inner parts of the glass are heated by both thermal radiation and the conduction of heat.

When a heating element of graphite is used in the fiber draw furnace, one should take care that the graphite is surrounded by a sphere of protective gas, because when in contact with indoor air or oxygen, graphite will easily burn at the temperatures prevailing in the fiber draw furnace.

Particularly with large preforms, the fiber draw furnace has a high energy requirement. For example, for large preforms, the need for electric energy supply into the furnace is 50 to 100 kW. However, a major part, typically more than 50 %, of the energy is discharged as heat outside the graphite element, and only a small part of the energy is used for heating the optical fiber preform itself. To minimize the energy consumption, the heated graphite element is enveloped by a thermal insulator which is typically made of graphite felt or solid porous graphite. The heat resistance of such an insulator is good (exceeding 2700 K), and its thermal insulation properties are also good; typically, the heat flux through an insulator thickness of 30 mm, given by manufacturers, is about 50 kW/m$^2$.

In practice, however, the heat flux through the insulator for an induction-heated fiber draw furnace is considerably higher than the above-mentioned value. This is probably due to the fact that some of the inductive energy is coupled to the insulator material, resulting in its heating. Because the coupling of the inductive energy is most efficient in the vicinity of the induction coil, the heating of the insulator will take place primarily on the outer surface of the insulator. From the outer surface of the insulator, the thermal energy is dissipated as radiation into the cooling water of the induction coil.

Attempts have been made to reduce and eliminate the dissipation of thermal energy by increasing the thickness of the insulator. However, an increase in the thickness of the insulator will also increase the coupling of inductive energy into the heating element and increase the coupling of the energy into the insulator. The coupling of power into the insulator has been slightly reduced by dividing the graphite insulator into segments.

It is the primarily aim of the present invention to present an insulator structure for a heating element, whereby the energy demand of an inductive fiber draw furnace can be substantially reduced.

To achieve this aim, the heating apparatus according to the invention is primarily characterized in that said heating element and insulator element are surrounded by a radiation shield to reflect the thermal radiation from the heating element towards the insulator element back to the heating element.

The other, dependent claims will present some preferred embodiments of the invention.

The basic idea of the invention is to provide the insulation of the heating element in the fiber draw furnace in such a way that directly around the graphite element there is a thin layer of insulating material surrounded by a material layer which reflects thermal radiation. Thus, the energy which tends to dissipate as thermal radiation from the outer surface of the insulator is reflected back from said reflection surface.

Because the thermal radiation from the graphite element of the fiber draw furnace is relatively extensive (in the order of 500 $kW/m^2$), it is advantageous to arrange the insulation of the furnace in such a way that directly around the graphite element there is a thin insulator of graphite felt or an insulator made of solid porous graphite. The coupling of inductive energy to such a thin insulator close to the heating element is insignificant. The energy dissipating as thermal radiation from the outer surface of the insulator is reflected back from the reflection surface, *i.e.* radiation shield, in the vicinity of the induction coil. Typically, this reflective surface has a high refractive index and is made of a material which is poorly heatable by induction, for example aluminium, silver or gold. The melting of the metal by the effect of the thermal power absorbed in it can be advantageously prevented *e.g.* by cooling the surface by means of the cooling of the induction coil.

It is also possible to install a separate shieding wall between the graphite insulator and the reflecting surface to prevent the fouling of the reflecting surface by the effect of carbon steam evaporating from the graphite. Such a shielding wall can be made of, for example, quartz glass, zirconium oxide or a heat-resistant metal, such as molybden.

In one advantageous embodiment of the invention, the heating element is enveloped in a thin graphite felt insulator (or a solid insulator) whose thickness is advantageously in the order of 15 to 30 mm. Around this, a quartz glass tube is arranged whose outer surface or inner surface is coated with a reflecting material, aluminium, silver, gold or palladium. The induction coil used for heating is advantageously brought almost in contact with the quartz glass tube.

In another embodiment of the invention, the heating element is enveloped in a thin graphite felt insulator around which a shielding wall is provided. The induction coil used for the heating is preferably cast in a ceramic mass, and the inner surface of the resulting tubular structure is coated with a reflecting material. The inner surface of the tubular structure which comprises the induction coil is arranged almost in contact with the shielding wall.

According to the present invention, the energy demand of the induction-heated furnace for drawing an optical fiber can be substantially reduced by reflecting the thermal energy which dissipates from the heating element and/or the insulator layer by thermal radiation, back to the heating element.

In the following, the invention will be described in more detail wi th reference to the appended principle drawings, in which

Fig. 1 shows a furnace for drawing fibers according to the invention,

Fig. 2 shows an insulator structure in a side view, and

Fig. 3 shows a cross-sectional view of Fig. 2.

For the sake of clarity, the figures only show the details needed for understanding the invention. The structures and details which are not needed for understanding the invention and which are obvious for anyone skilled in the art have been omitted from the figures in order to emphasize the characteristics of the invention.

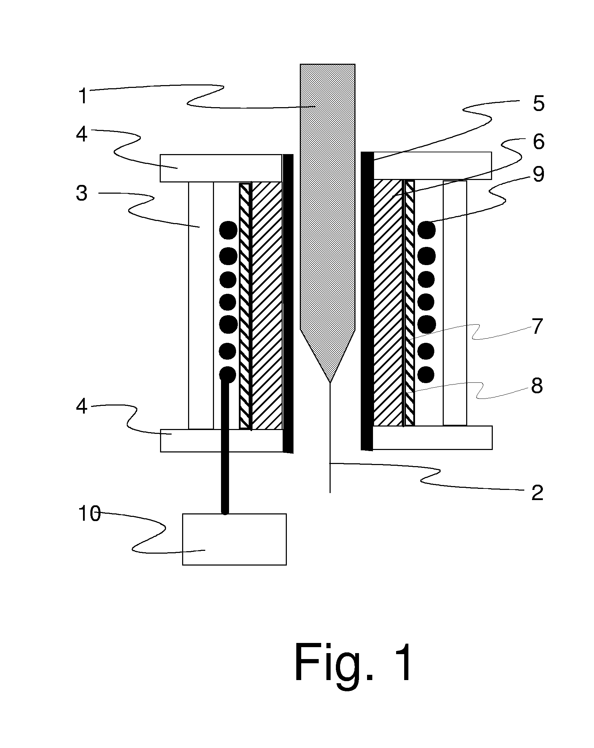

The fiber draw furnace shown in Fig. 1 comprises a preform 1 which is arranged in a substantially vertical direction and from which a fiber 2 is formed by drawing it substantially downwards. The preform 1 arranged in the fiber draw furnace is surrounded by a heating element 5 in the vertical direction. The heating element 5 is enveloped in a thermal insulator structure 6, 7, 8 according to the invention, to insulate the heating element from an induction coil 9. The heating element 5 and the induction coil 9 constitute the heating system for the fiber draw furnace. The heating system is typically arranged inside the body 3 of the fiber draw furnace, and in the example, the upper and lower parts of the body are provided with end flanges 4 which enclose the heating system substantially in the body. The body 3 and the end flanges 4 are typically cooled by water. For the sake of clarity, the cooling system is not shown in the drawings. For the same reason, the figures do not show all the structures which are arranged in the fiber draw furnace but which do not substantially belong to the scope of the invention, such as the structures used for supplying various gases.

For a part of the distance in the height direction, the heating system encloses the preform 1 arranged inside the fiber draw furnace, particularly inside the heating element 5. Typically, the preform 1 is arranged inside the heating element 5 via an opening in the upper end flange 4. Inside the heating element 5, the preform 1 is softened, and a fiber 2 is formed of it, which fiber is led to further processes typically via an opening in the lower end flange 4.

The induction coil 9 around the heating element 5 in the vertical direction is supplied with an alternating voltage from a power source 10. The frequency of the alternating voltage is typically from 1 to 100 kHz. In the induction coil 9, the voltage generates a current which, in turn, induces a magnetic field. In the heating element 5, the magnetic field induces an eddy current which, in the case shown in Fig. 1, orbits along the periphery of the heating element. The resistance of the heating element 5 causes a power dissipation, for which reason the heating element is heated. In the embodiment according to the example, the heating element 5 is made of graphite, but it can also be made of another suitable material, such as zirconium oxide, molybden, tungsten, platinum, or the like, depending on the glass material used.

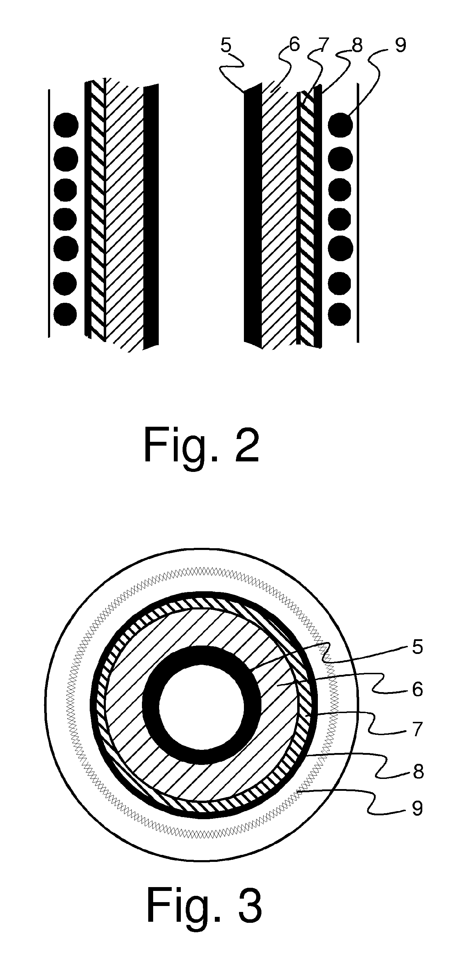

The fiber preform 1 is subjected to thermal radiation from the hot heating element 5 which heats said fiber preform. To avoid excessive heating of the other structures of the furnace, a thermal insulator structure 6, 7, 8 is placed between the heating element 5 and the induction coil 9. One embodiment of the thermal insulator structure is shown in enlarged views in Figs. 2 and 3, of which Fig. 3 shows a cross-sectional view of Fig. 2. The thermal insulator structure preferably comprises an insulator material layer 6, a shielding wall 7 and a radiation shield 8, which will be described in more detail hereinbelow.

The primary form of transfer of thermal energy from the heating element 5 to the insulator 6 and from the insulator to the induction coil 9 or other cooled surfaces of the furnace is thermal radiation. By means of thermal radiation, the energy transferred between two infinite surfaces can be calculated from formula 1.

$$P/A = e_{ef}s(T_h^4 - T_c^4) \qquad (1)$$

in which P represents the thermal energy, A represents the surface area, $e_{ef}$ represents the effective emissivity, s is the Stefan-Boltzmann constant, $T_h$ is the absolute temperature of the hot surface, and $T_c$ is the absolute temperature of the cold surface.

The effective emissivity is calculated by the formula 2:

$$1/e_{ef} = 1/e_c + 1/e_h - 1 \qquad (2)$$

in which $e_c$ is the absorption coefficient of the cold surface and $e_h$ represents the emissivity of the hot surface.

With the formula, it can be stated that if the insulator structure 6, 7, 8 of the fiber draw furnace is constructed to be such that the surface which receives thermal radiation has a high refractive index (1-$e_c$), the thermal dissipation caused by radiation can be substantially reduced.

According to the present invention, the thermal energy dissipating as thermal radiation from the heating element 5 and/or the insulator 6 in an induction-heated furnace for drawing optical fibers is reflected back towards the heating element 5, wherein the energy demand of the fiber draw furnace can be substantially reduced.

Because the thermal radiation from the heating element 5 of the fiber draw furnace is very extensive, it is advantageous to arrange the insulator structure 6, 7, 8 of the furnace in such a way that directly around the heating element 5 there is a thin graphite felt insulator 6 or an insulator made of solid porous graphite. The coupling of inductive energy to such a thin insulator 6 close to the heating element 5 is insignificant. The energy which dissipates as thermal radiation from the outer surface of the insulator 6 is reflected back from the radiation shield 8 or reflection surface in the vicinity of the induction coil 9. Preferably, the radiation shield 8 is made of a material having a high refractive index and being poorly heatable by induction. Most typically, this reflecting surface 8 is made of metal, for example aluminium, silver or gold. The melting of the metal by the effect of the thermal energy absorbed in it can be advantageously prevented e.g. by cooling the reflecting surface 8 by means of the cooling of the induction coil 9.

In an advantageous embodiment of the invention, a separate shielding wall 7 is placed between the graphite insulator 6 and the reflecting surface 8 to prevent the soiling of the reflecting surface by the effect of carbon steam evaporating from the graphite. Such a shielding wall 7 can be made of, for example, quartz glass, zirconium oxide or a heat-resistant metal, such as molybden.

In one embodiment of the invention, the heating element 5 is enveloped in a thin graphite felt insulator 6 (or a solid insulator) whose thickness is advantageously in the order of 15 to 30 mm. This insulator material 6 is surrounded by a quartz glass tube 7 whose outer surface or inner surface is coated with a reflecting material 8, such as, for example, aluminium, silver, gold or palladium. In Fig. 1, there is a radiation shield 8 provided on the side of the inner surface of the shielding wall 7, whereas in Figs. 2 and 3, the radiation shield 8 is provided on the side of the outer surface of the shielding wall 7. The induction coil 9 to be used for heating is advantageously arranged almost in contact with the quartz glass tube 7, and the induction coil can be preferably cast in a ceramic mass.

In another advantageous embodiment of the invention, the heating element 5 is surrounded by a thin graphite felt insulator 6 which is arranged to be surrounded by a shielding wall 7. The induction coil 9 used for the heating is preferably cast in a ceramic mass, and the inner surface of the tubular structure thus formed is coated with a reflecting material, such as, for example, aluminium, silver or gold. The structure corresponds to the structure shown in Figs. 2 and 3. Advantageously, the inner surface of the tubular structure which comprises the induction coil 9 is arranged almost in contact with the shielding wall 7.

In another variant of the preceding embodiment, there is no shielding wall 7 between the insulator layer 6 and the tubular structure which comprises the induction coil 9, but the inner surface of the structure which comprises the induction coil and which is thus provided with the radiation shielding 8, is advantageously arranged almost in contact with the insulator layer. In some advantageous embodiments, the inner surface of the tubular structure which comprises the induction coil 9 is provided with both the radiation shielding 8 and the shielding wall 7, by a suitable coating method.

The material layer 8 which reflects thermal radiation can be formed in a variety of ways. The reflecting material can be, for example, a separate tube which is placed between the insulator 6 and the induction coil 9. However, it is advantageous to arrange the reflecting material in connection with another means in the furnace, such as the insulator layer 6, the shielding wall 7 or another structure, for example by coating said means. Preferably, said means is the above-described shielding wall 7 or the structure comprising the induction coil 9. The coating can also be provided by a variety of methods, such as, for example, the method of depositing material layers based on electrical charges, or the flame spraying method.

The materials to be used in the insulator structure 6, 7, 8 are selected according to the application in such a way that the properties of the different materials correspond to the operating conditions. For example, the materials for the reflecting layer 8 and the possible shielding wall 7 are selected so that the efficiency of the induction heating device 9 used is coupled to the structures as little as possible.

The above-presented insulator structure 6, 7, 8 for a fiber draw furnace is not dependent on the shape of the drawing space in the fiber draw furnace used. The drawing space can be formed to be straight and/or tapering to achieve the properties desired for the fiber draw furnace.

By combining, in various ways, the modes and structures disclosed in connection with the different embodiments of the invention presented above, it is possible to produce various embodiments of the invention in accordance with the spirit of the invention. Therefore, the above-presented examples must not be interpreted as restrictive to the invention, but the embodiments of the invention can be freely varied within the scope of the inventive features presented in the claims hereinbelow.

**Claims**

1. A heating apparatus for manufacturing an optical fiber (2) from a preferably vertical fiber preform (1) in a draw furnace, in which draw furnace the fiber preform is heated with the heating apparatus in such a way that a molten, downwards tapering zone is formed in the fiber preform, from which a thin fiber (2) is produced by gravity and/or by drawing the fiber downwards, the heating apparatus comprising at least

   - a preferably tubular heating element (5) placed around the fiber preform (1) in the draw furnace, for heating the fiber preform,
   - a preferably tubular heating means (9) placed around the heating element in the draw furnace, for heating the heating element, and
   - a preferably tubular insulator element (6) placed around the heating element in the draw furnace,

   **characterized in that** said heating element (5) and insulator element (6) are enveloped at least partly by a radiation shielding (8) to reflect thermal radiation emitted from the heating element to the insulator element, back to the heating element.

2. The heating apparatus according to claim 1, **characterized in that** the heating means (9) is an induction coil.

3. The heating apparatus according to claim 1 or 2, **characterized in that** the heating apparatus also comprises a shielding wall (7) arranged between the insulator element (6) and the heating means (9).

4. The heating apparatus according to any of the preceding claims, **characterized in that** the radiation shielding (8) is arranged in one of the following locations in the heating apparatus:

   - on the inner surface of the structure which comprises the heating means (9),
   - on the outer surface of the shielding wall (7),
   - on the inner surface of the shielding wall (7),
   - on the outer surface of the insulator element (6).

5. The heating apparatus according to any of the preceding claims, **characterized in that** the radiation shielding (8) comprises at least one of the following materials: aluminium, silver, gold, or palladium.

6. The heating apparatus according to any of the preceding claims, **characterized in that** the shielding wall (7) is made of quartz glass, zirconium oxide or molybden.

# Fig. 1

Fig. 2

Fig. 3